# EUROPEAN PATENT SPECIFICATION

(11) **EP 3 447 226 B1**
(45) Date of publication and mention of the grant of the patent: **24.06.2020**
(21) Application number: 18179578.2
(22) Date of filing: 25.06.2018
(51) Int. Cl.: E05F 5/02

(54) **OVER SLAM HOOD BUMPER**
MOTORHAUBENSTOSSFÄNGER
BUTOIR DE CAPOT SUR SLAM

(30) Priority: 21.08.2017 US 201715681709
(43) Date of publication of application: 27.02.2019
(73) Proprietor: Maclean-Fogg Company, Mundelein, IL 60060-3890 (US)
(72) Inventor: DAVIS, David J., Rochester, MI 48306 (US)
(74) Representative: Zacco Denmark A/S

(56) References cited:
- EP-A1- 2 864 186
- JP-A- H11 336 820
- US-A1- 2017 096 119

## Description

### BACKGROUND

The present invention relates generally to hood bumpers for automotive vehicles, and more particularly, to a hood bumper that manages energy from impacts to the vehicle hood.

Typically, hood bumpers are mounted in an automotive vehicle between the frame of the vehicle and the bottom surface of a front portion of the vehicle hood. A purpose of hood bumpers is to provide a support surface for the hood when it is closed. Vehicle manufacturers and transportation regulators, however, are frequently concerned about the safety of automotive vehicles. One safety concern that has been expressed is that in highly dense communities, collisions between automotive vehicles and pedestrians can result in severe injuries to pedestrians who are hit by moving vehicles. One of the most common types of collisions between an automotive vehicle and a pedestrian involves the vehicle driving forward into a walking pedestrian so that the pedestrian falls onto and is hit by the hood of the vehicle. In these situations, a substantial portion of the moving vehicle's energy is transmitted to the pedestrian. In other words, while the vehicle may not suffer much damage, the pedestrian experiences the full force of the impact and can be severely injured.

Therefore, it is desirable for automotive vehicles to be equipped with vehicle hood arrangement that manages some of the impact energy during a collision instead of transmitting most of the impact energy to the pedestrian. However, the majority of conventional hood bumper assemblies are not capable of managing significant energy during an impact. In particular, the features in most hood bumper assemblies are generally solid connections and cannot effectively absorb energy when a direct force is applied to the hood. For example, while a conventional threaded connection in a bumper assembly can be used to adjust the height of a vehicle hood during manufacturing or later during an intentional adjustment by turning the threaded components relative to each other, a direct vertical load to the threaded connection will not absorb energy. Thus, while conventional bumper assemblies can be intentionally adjusted in height, conventional bumper assemblies do not absorb energy during an impact. Automotive vehicles may include additional equipment in order to absorb energy during a collision, such as sacrificial brackets that break or give way when the vehicle hood is impacted.

Accordingly, it would be desirable to provide a new vehicle hood bumper that could both break-away quickly and absorb or manage the impact energy. US 2017/096119 discloses a hood bumper comprising a tower and a base.

### SUMMARY

A hood bumper according to the invention includes a tower with tower legs and a tower connecting piece extending between the tower legs, where the tower legs are spaced apart from one another by a first distance to define a cavity between the tower legs. The hood bumper also includes a base with base walls, a base floor extending between the base walls, and transition pieces extending between the base walls and the tower legs, where each transition piece includes a frangible area that is configured to fracture when a predetermined force is applied to the frangible area. The hood bumper also includes an energy management protrusion extending from the base floor, where the energy management protrusion extends toward the cavity between the tower legs, and a dimension of the energy management protrusion is larger than the first distance between the tower legs. A method of absorbing energy is disclosed in independent claim 15.

### BRIEF DESCRIPTION OF THE DRAWINGS

The invention can be better understood with reference to the following drawings and description. The components in the figures are not necessarily to scale, emphasis instead being placed upon illustrating the principles of the invention. Moreover, in the figures, like referenced numerals designate corresponding parts throughout the different views.
FIG. 1 is a front view of a hood bumper embodiment.
FIG. 2 is a perspective view of the hood bumper embodiment.
FIG. 3 is a cross-sectional view of portions of the hood bumper embodiment.

### DETAILED DESCRIPTION OF THE DRAWINGS

The improved hood bumpers disclosed quickly break-away and allow for two energy absorption methods to occur in one device without the use of sacrificial brackets or other additional devices.

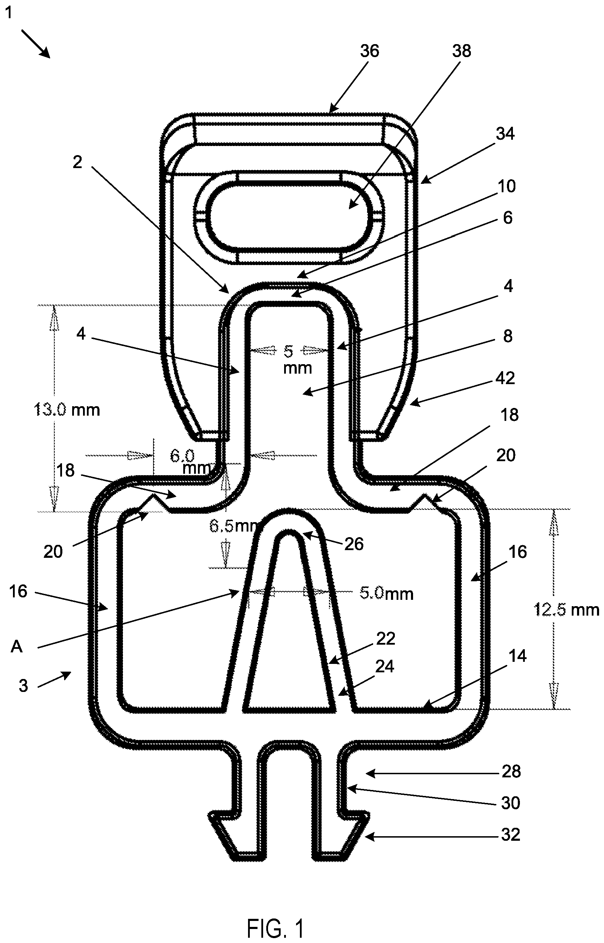

Referring now to the figures, FIG. 1 shows an embodiment of an improved hood bumper 1. The dimensions shown in FIG. 1 between the hollow arrows are in millimeters and are exemplary and may be adjusted to meet the design requirements of the application of hood bumper 1. Hood bumper 1 may include a tower 2 and a base 3. Tower 2 may include at least two tower legs 4 and may include more than two tower legs 4. Tower legs 4 may be joined or connected by a connecting piece 6. Connecting piece 6 may connect the top of tower legs 4, as shown in FIG. 1, or may connect other portions of tower legs 4. Tower legs 4 may be spaced apart from one another such that there is a cavity 8 between the tower legs 4. Additionally or alternatively, tower legs 4 may be spaced radially around cavity 8 and may be joined such that tower legs 4 form a single component that surrounds cavity 8.

Tower 2 may include a top surface 10 that is designed to contact the bottom surface of a vehicle hood inner (not shown). During a collision between the vehicle hood and an object, such as a pedestrian, force from the collision will be applied from the vehicle hood to top surface 10 in a primarily downward direction (as hood bumper 1 is oriented in FIG. 1). Tower 2 and base 3 may be designed and shaped to support a vehicle hood during normal operation of the vehicle.

Tower legs 4 and connecting piece 6 may be designed and shaped to resist tower legs 4 being spread apart from one another such that it is difficult to increase the size of cavity 8. Tower legs 4 and connecting piece 6 may be designed to withstand a predetermined amount of force before tower legs 4 are spread apart from one another.

Base 3 may include a base floor 14 near the bottom of base 3 and may include base walls 16 extending from base floor 14. Base 3 may include two base walls 16, as shown in FIG. 1, but may include more than two base walls 16 such that base 3 is enclosed or partially enclosed. Base 3 may be generally rectangular in shape, as shown in FIG. 1, or may be another other shape capable of supporting a vehicle hood, such as circular, spherical, triangular, or trapezoidal. Base 3 may be designed and shaped to provide some flexibility to base 3 such that base 3 may bend and flex as a vehicle hood contacts hood bumper 1.

Base 3 may include transition pieces 18 that extend from base walls 16 to tower legs 4. Transition pieces 18 may be generally horizontal, as shown in FIG. 1, but may be oriented in any manner and may include vertical portions. Transition pieces 18 may include frangible areas 20. Frangible areas 20 may be designed to fracture when force is applied to transition pieces 18. Frangible areas 20 may be designed to fracture under a precise predetermined force, such that frangible areas 20 remain intact when less than the predetermined force is applied and fracture when a force greater or equal to the predetermined force is applied. The predetermined force may be tuned based on the particular design requirements of hood bumper 1, such as based on the particular vehicle and/or vehicle hood contacting hood bumper 1 and/or the amount of energy hood bumper 1 is intended to absorb.

Frangible areas 20 may be any shape that is designed to intentionally fracture under a force. For example, in FIG. 1, frangible areas 20 are sharp angled notches cut out of transition pieces 18. Frangible areas 20 could also be other shapes and designs, such as for example, slits, perforations, holes, thinned areas, etc.

Frangible areas 20 may be located in any portion of transition pieces 20. FIG. 1 shows frangible areas 20 located in the lower surface of transition pieces 18. Frangible areas 20 are located in FIG. 1 such that a force directed downward from the top of hood bumper 1 will induce a strain in frangible areas 20 placing frangible areas 20 in a tensile mode that allows for a precise and known predetermined force to fracture transition pieces 18. Knowing the precise force required to facture transition pieces 18 allows hood bumper 1 to be designed to absorb a known amount of energy before fracturing.

Base 3 may include an energy management protrusion 22 extending from base floor 14. Energy management protrusion 22 may be positioned below cavity 8 and may extend upwards toward cavity 8. Energy management protrusion 22 may be any shape, such as a triangular shape, as shown in FIG. 1, or a cone, spherical, or circular shape, etc. Energy management protrusion 22 may transition from a relatively wide base portion 24 at base floor 14 to a relatively narrow tip 26. The transition from base portion 24 to tip 26 may be linear, as shown in FIG. 1, or may be any other shape such as a concave or convex curve.

The tip 26 of energy management protrusion 22 may be smaller than cavity 8 such that the portion of energy management protrusion 22 near tip 26 may enter cavity 8. The base portion 24 of energy management protrusion 22 may be larger than cavity 8 such that the portion of energy management protrusion 22 near base portion 24 can only fit within cavity 8 if the size of cavity 8 is increased by tower legs 4 being spread apart from one another more than is shown in FIG. 1.

Energy management protrusion 22 may have a hollow interior, as shown in FIG. 1, in order to reduce the amount of material required to create hood bumper 1 and to reduce the weight of hood bumper 1. Energy management protrusion 22 may also be hollow in order to allow energy management protrusion 22 to be compressed, such as by tower legs 4. Additionally or alternatively, energy management protrusion 22 may have a solid, partially solid, or reinforced interior to prevent energy management protrusion 22 from collapsing.

Base 3 is designed to be attached to a vehicle frame (not shown), such as a front end cross over member or fender frame. In order to attach the base 3 to the vehicle frame, base 3 may have a bottom extension 28 with a shape that slides into an opening, such as slots or a hole, in the vehicle frame. The bottom extension 28 may also have at least one elastic snap 30 that deflects inward when the bottom extension 28 is pushed through the frame opening. Once the bottom extension 28 has been pushed through the frame opening, the top surface of the frame abuts against the lower surface of base floor 14, and the snaps 30 return to the state shown FIG. 1 so that the teeth 32 on the snaps 30 trap a bottom surface of the frame (not shown). Bottom extension 28 may utilize other types of snap features to attach to the vehicle frame.

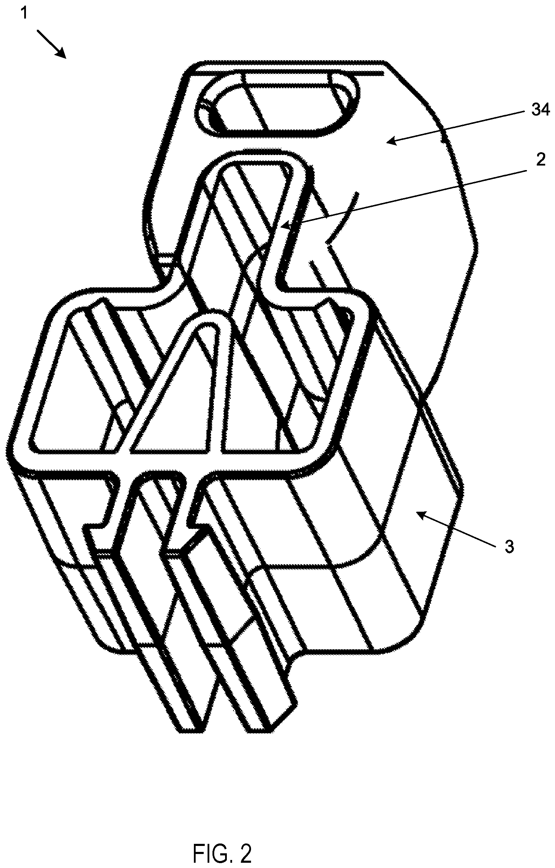

FIG. 2 shows hood bumper 1 from a perspective view. Hood bumper 1 may be integrally formed such that tower 2 and base 3 are one unitary piece. Alternatively, the components of hood bumper 1 may be formed separately and joined together, such as by conventional or sonic welding, for example. Hood bumper 1 may be made from any material, such plastic polymer material or metal. Hood bumper 1 may have any depth required for the application of hood bumper 1. The material and depth of hood bumper 1 may be varied to provide the required amount of strength and flexibility of hood bumper 1.

Hood bumper 1 may include tower bumper 34 located on tower 2. The top surface 36 of tower bumper 34 may be designed to contact the bottom surface of a vehicle hood inner (not shown). During a collision between the vehicle hood and an object, such as a pedestrian, force from the collision will be applied from the vehicle hood to top surface 36 of tower bumper 34 in a primarily downward direction (as hood bumper 1 is oriented in FIG. 1). Tower bumper 34 may be composed of material that is softer than tower 2 in order to cushion the impact of the vehicle hood on hood bumper 1 during a collision. Tower bumper 34 may be a soft over-molded or two-shot molded thermoplastic elastomer on tower 2.

Tower bumper 34 may include cut-out area 38. Cut-out area 38 may provide additional cushion and energy absorption by deflecting downward during a collision. Cut-out area 38 may be sized to provide a customized deflection and energy absorption depending upon the hood weight and crush requirements. Cut-out area 38 may also reduce the amount of material and reduce the weight of tower bumper 34.

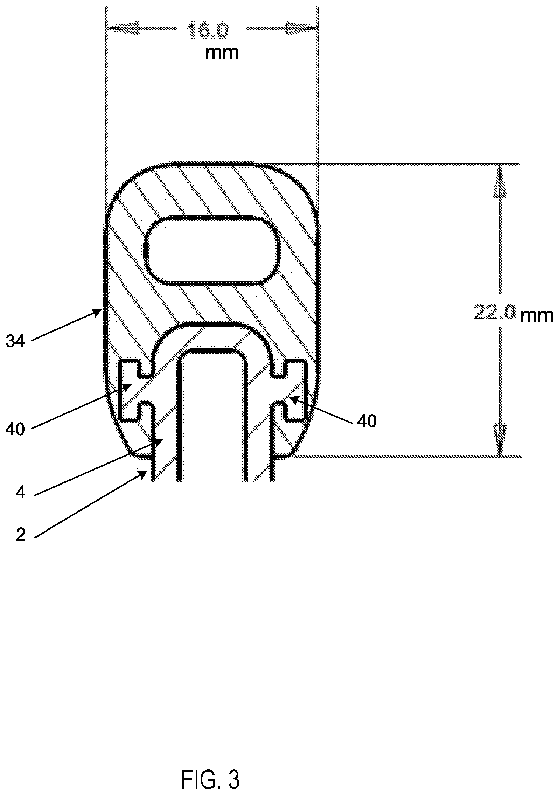

FIG. 3 shows a cross-sectional view of an embodiment of tower 2 and tower bumper 34. In this embodiment tower 2 may include ear protrusions 40 extending from tower legs 4. Ear protrusions 40 may provide surfaces to secure tower bumper 34 onto tower 2. Ear protrusions 40 may be any number and shape to securely attach tower bumper 34 to tower 2. The dimensions shown in FIG. 3 are exemplary and may be adjusted to meet the design requirements of the application of hood bumper 1.

The operation of hood bumper 1 following an impact of an object with a vehicle hood will now be described. The impact will cause the vehicle hood to exert a downward force on top surface 36 of tower bumper 34. The downward force will be transmitted through tower legs 4 to transition pieces 18. Frangible areas 20 in transition pieces 18 will fracture if the downward force is larger than the predetermined force required to fracture frangible areas 20. Once frangible areas 20 fracture, tower 2 will fall onto the energy management protrusion 22.

Tower 2 will fall freely until the size of energy management protrusion 22 is larger than the width of cavity 8, at which point energy management protrusion 22 will engage tower legs 4. For example, FIG. 1 shows that cavity 8 is 5 millimeters wide and that energy management protrusion 22 is 5 millimeters wide at a point A, which is approximately located between the midpoint of energy management protrusion 22 and tip 26 of energy management protrusion 22. Accordingly, tower legs 4 will engage energy management protrusion 22 after tower legs 4 fall past point A on energy management protrusion 22 and tower legs 4 will begin to be forced apart from one another, which will slow the descent of tower 2 onto energy management protrusion 22. Forcing tower legs 4 apart and slowing the descent of tower 2 will manage energy from the vehicle hood that is contacting the top surface 36 of tower bumper 34. Tower 2 will continue to descend until tower legs 4 reach the base floor 14 and/or tip 26 of energy management protrusion 22 reaches the top of cavity 8. Tower 2 may completely collapse at base floor 14.

FIG. 1 shows that energy management protrusion 22 will engage tower legs 4 after tower 4 has fallen 6.5 millimeters, which is half the 13.0 millimeter depth of cavity 8. The depth of cavity 8 may be the maximum distance that tower 2 can fall onto energy management protrusion 22. The size of energy management protrusion 22 may be varied to adjust when energy management protrusion 22 will engage tower legs 4. The amount of energy hood bumper 1 absorbs can be adjusted by varying the size of energy management protrusion 22 and cavity 8 in order to adjust when tower legs 4 engage energy management protrusion 22 and begin to slow the descent of tower 2 and how far tower 2 will descend. Similarly, the width and angle of energy management protrusion 22 may be prescribed and varied to adjust how much energy is absorbed. For example, a wider base portion 24 of energy management protrusion 22 will force tower legs 4 further apart, which will require more force and will absorb more energy from the impact with the vehicle hood. Similarly, the shape of energy management protrusion 22 may be prescribed and varied to adjust how much energy is absorbed. For example, a concave curved shape of the sides of energy management protrusion 22 may provide a relatively small amount of resistance as tower 2 initially contacts energy management protrusion 22, but may provide a relatively larger amount of resistance as tower 2 continues to descend on energy management protrusion 22 because energy management protrusion 22 gets wider rapidly near base portion 24 due the concave curve of the sides of energy management protrusion 22.

In addition to tower legs 4 and connecting piece 6 being designed and shaped to resist tower legs 4 being spread apart from one another, as discussed above, other aspects of hood bumper 1 may be designed and shaped to influence how tower 2 descends on energy management protrusion 22. For example, the angled shape of outer portions 42 of tower bumper 34 may allow portions of fractured transition pieces 18 to bend upward toward tower 2 without contacting outer portions 42 of tower bumper 34 or to delay the contact between the portions of transition pieces 18 and outer portions 42 of tower bumper 34. Preventing or delaying the contact between the portions of transition pieces 18 and outer portions 42 may provide less resistance to tower 2 descending on energy management protrusion 22. Alternatively, removing the angled shape of outer portions 42 may cause portions of fractured transition pieces 18 to contact outer portions 42 sooner and provide greater resistance to tower 2 descending on energy management protrusion 22, which may absorb more energy from the impact with the vehicle hood. Additionally or alternatively, the angled shape of outer portions 42 may allow tower 2 to fit within the fractured transition pieces 18 and allow tower 2 to move downward.

It should be understood that the hood bumpers disclosed are not limited to the embodiments described, modifications may be made without departing from the disclosures herein. While the embodiment described herein may refer to certain features, it should be recognized that the features described herein are interchangeable and may be included or excluded as necessary, unless described otherwise, even where no reference is made to a specific feature. It should also be understood that the advantages described above are not necessarily the only advantages of the hood bumpers, and it is not necessarily expected that all of the described advantages will be achieved with every feature of the disclosed embodiment. The scope of the disclosure is defined by the appended claims, and all devices and methods that come within the meaning of the claims are intended to be embraced therein.

## Claims

1. A hood bumper (1) comprising:
a tower (2) with tower legs (4) and a tower (2) connecting piece (6) extending between the tower legs (4), wherein the tower legs (4) are spaced apart from one another by a first distance to define a cavity (8) therebetween;
a base (3) with base walls (16), a base floor (14) extending between the base walls (16), and transition pieces (18) extending between the base walls (16) and the tower legs (4), wherein each transition piece (18) includes a frangible area (20) that is configured to fracture when a predetermined force is applied to the frangible area (20);
**characterised in** an energy management protrusion extending (22) from the base floor (14), wherein the energy management protrusion (22) extends toward the cavity (8) between the tower legs (4), wherein a dimension of the energy management protrusion (22) is larger than the first distance between the tower legs (4).

2. The hood bumper of claim 1, wherein the energy management protrusion (22) is configured to spread the tower legs (4) apart from one another as the energy management protrusion (22) enters the cavity (8) after the frangible areas (20) have broken.

3. The hood bumper of claim 1, wherein the frangible areas (20) are located on a lower surface of the transition pieces (18).

4. The hood bumper of claim 3, wherein each frangible area (20) comprises a notch.

5. The hood bumper of claim 1, wherein the frangible areas (20) are configured to fracture when a tensile load is applied to the transition pieces (18).

6. The hood bumper of claim 1, wherein the tower (2), base (3), and energy management protrusion (22) are formed integrally.

7. The hood bumper of claim 1, wherein the energy management protrusion (22) has a triangular shape.

8. The hood bumper of claim 1, wherein the energy management protrusion (22) has a hollow interior.

9. The hood bumper of claim 1, further comprising a tower bumper (34) disposed on the tower (2), wherein the tower bumper (34) is comprised of material that is softer than the material of the tower (2).

10. The hood bumper of claim 9, wherein the tower (2) includes protrusions to secure the tower bumper (34) to the tower (2).

11. The hood bumper of claim 1, wherein a width of the energy management protrusion (22) is equal to the first distance at a middle portion of the energy management protrusion (22).

12. The hood bumper of claim 1, further comprising a bottom extension (28) on a lower surface of base floor (14), wherein the bottom extension (28) includes at least one elastic snap (30) configured to deflect when the hood bumper (1) is connected to a frame of a vehicle.

13. The hood bumper of claim 1, wherein each transition piece (18) includes a horizontal component and a vertical component.

14. The hood bumper of claim 13, wherein the frangible areas (20) are located in the horizontal components.

15. A method of absorbing energy from an impact to an automotive hood using a hood bumper, where the hood bumper has tower legs (4) spaced apart from one another; a base (3) with base walls (16), a base floor (14) extending between the base walls (16), and transition pieces (18) extending between the base walls (16) and the tower legs (4), wherein each transition piece (18) includes a frangible area (20) that is configured to fracture when a predetermined force is applied to the frangible area (20); an energy management protrusion (22) extending from the base floor (14); the method comprising:
applying a force greater than the predetermined force to the transition pieces (18) through the tower legs (4);
fracturing the transition pieces (18) at the frangible areas (20);
**characterised in**
descending the tower legs (4) onto the energy management protrusion (22);
spreading the tower legs (4) apart from one another with the energy management protrusion (22) to absorb energy from the impact.

## Patentansprüche

1. Motorhaubenstoßfänger (1) umfassend:
einen Turm (2) mit Turmschenkeln (4) und einem Verbindungsstück (6) für einen Turm (2), das sich zwischen den Turmschenkeln (4) erstreckt, wobei die Turmschenkel (4) um einen ersten Abstand voneinander beabstandet sind, um dazwischen einen Hohlraum (8) zu definieren;
eine Basis (3) mit Basiswänden (16), einem Basisboden (14), der sich zwischen den Basiswänden (16) erstreckt, und Übergangsstücken (18), die sich zwischen den Basiswänden (16) und den Turmschenkeln (4) erstrecken, wobei jedes Übergangsstück (18) einen zerbrechlichen Bereich (20) umfasst, der ausgelegt ist, um zu brechen, wenn eine vorbestimmte Kraft auf den zerbrechlichen Bereich (20) aufgebracht wird;
**gekennzeichnet durch** einen Energiemanagementvorsprung (22), welcher sich von dem Basisboden (14) erstreckt, wobei der Energiemanagementvorsprung (22) sich in Richtung des Hohlraums (8) zwischen den Turmschenkeln (4) erstreckt, wobei eine Abmessung des Energiemanagementvorsprungs (22) größer ist als der erste Abstand zwischen den Turmschenkeln (4).

2. Motorhaubenstoßfänger nach Anspruch 1, wobei der Energiemanagementvorsprung (22) dazu ausgelegt ist, die Turmschenkel (4) auseinander zu spreizen, wenn der Energiemanagementvorsprung (22) in den Hohlraum (8) eintritt, nachdem die zerbrechlichen Bereiche (20) gebrochen worden sind.

3. Motorhaubenstoßfänger nach Anspruch 1, wobei die zerbrechlichen Bereiche (20) auf einer unteren Fläche der Übergangsstücke (18) angeordnet sind.

4. Motorhaubenstoßfänger nach Anspruch 3, wobei jeder zerbrechliche Bereich (20) eine Kerbe umfasst.

5. Motorhaubenstoßfänger nach Anspruch 1, wobei die zerbrechlichen Bereiche (20) ausgelegt sind, um zu brechen, wenn eine Zuglast auf die Übergangsstücke (18) aufgebracht wird.

6. Motorhaubenstoßfänger nach Anspruch 1, wobei der Turm (2), die Basis (3) und der Energiemanagementvorsprung (22) einstückig ausgebildet sind.

7. Motorhaubenstoßfänger nach Anspruch 1, wobei der Energiemanagementvorsprung (22) eine dreieckige Form aufweist.

8. Motorhaubenstoßfänger nach Anspruch 1, wobei der Energiemanagementvorsprung (22) einen hohlen Innenraum aufweist.

9. Motorhaubenstoßfänger nach Anspruch 1, ferner umfassend einen am Turm (2) angeordneten Turmstoßfänger (34), wobei der Turmstoßfänger (34) aus einem Material besteht, das weicher ist als das Material des Turms (2).

10. Motorhaubenstoßfänger nach Anspruch 9, wobei der Turm (2) Vorsprünge zur Befestigung des Turmstoßfängers (34) am Turm (2) umfasst.

11. Motorhaubenstoßfänger nach Anspruch 1, wobei eine Breite des Energiemanagementvorsprungs (22) gleich dem ersten Abstand an einem mittleren Abschnitt des Energiemanagementvorsprungs (22) ist.

12. Motorhaubenstoßfänger nach Anspruch 1, ferner umfassend eine untere Verlängerung (28) an einer unteren Fläche des Basisbodens (14), wobei die untere Verlängerung (28) mindestens einen elastischen Schnappverschluss (30) umfasst, der dazu ausgelegt ist, sich abzulenken, wenn der Motorhaubenstoßfänger (1) mit einem Rahmen eines Fahrzeugs verbunden ist.

13. Motorhaubenstoßfänger nach Anspruch 1, wobei jedes Übergangsstück (18) eine horizontale Komponente und eine vertikale Komponente umfasst.

14. Motorhaubenstoßfänger nach Anspruch 13, wobei die zerbrechlichen Bereiche (20) in den horizontalen Komponenten angeordnet sind.

15. Verfahren zum Absorbieren von Energie aus einem Aufprall auf eine Kraftfahrzeughaube unter Verwendung eines Motorhaubenstoßfängers, wobei der Motorhaubenstoßfänger aufweist voneinander beabstandete Turmschenkel (4); eine Basis (3) mit Basiswänden (16), einem sich zwischen den Basiswänden (16) erstreckenden Basisboden (14) und sich zwischen den Basiswänden (16) und den Turmschenkeln (4) erstreckenden Übergangsstücken (18), wobei jedes Übergangsstück (18) einen zerbrechlichen Bereich (20) umfasst, der ausgelegt ist, um zu brechen, wenn eine vorbestimmte Kraft auf den zerbrechlichen Bereich (20) aufgebracht wird; einen Energiemanagementvorsprung (22), der sich von dem Basisboden (14) erstreckt, welches Verfahren umfasst:
Aufbringen einer als die vorbestimmte Kraft größeren Kraft auf die Übergangsstücke (18) durch die Turmschenkel (4);
Brechen der Übergangsstücke (18) an den zerbrechlichen Bereichen (20);
**gekennzeichnet durch**
Absenken der Turmschenkel (4) auf den Energiemanagementvorsprung (22); Spreizen der Turmschenkel (4) voneinander mit dem Energiemanagementvorsprung (22), um Energie aus dem Aufprall zu absorbieren.

## Revendications

1. Pare-chocs de capot (1) comprenant:
une tour (2) avec des pieds de tour (4) et une pièce de connexion (6) de tour (2) s'étendant entre les pieds de tour (4), les pieds de tour (4) étant espacés les uns des autres d'une première distance pour définir une cavité (8) entre eux;
une base (3) avec des parois de base (16), un plancher de base (14) s'étendant entre les parois de base (16) et des pièces de transition (18) s'étendant entre les parois de base (16) et les pieds de tour (4), dans lequel chaque pièce de transition (18) comprend une zone cassante (20) qui est configurée pour se rompre lorsqu'une force prédéterminée est appliquée sur la région cassable (20);
**caractérisé en ce qu'**une saillie de gestion d'énergie s'étendant (22) à partir du plancher de base (14), dans laquelle la saillie de gestion d'énergie (22) s'étend vers la cavité (8) entre les pieds de tour (4), dans laquelle une dimension de la saillie de gestion d'énergie (22) est plus grande que la première distance entre les pieds de tour (4).

2. Pare-chocs de capot selon la revendication 1, dans lequel la saillie de gestion d'énergie (22) est configurée pour écarter les pieds de tour (4) les uns des autres lorsque la saillie de gestion d'énergie (22) pénètre dans la cavité (8) après la rupture des zones frangibles (20).

3. Pare-chocs de capot selon la revendication 1, dans lequel les zones frangibles (20) sont situées sur une surface inférieure des pièces de transition (18).

4. Pare-chocs de capot selon la revendication 3, dans lequel chaque zone frangible (20) comprend une encoche.

5. Pare-chocs de capot selon la revendication 1, dans lequel les zones frangibles (20) sont configurées pour se rompre lorsqu'une charge de traction est appliquée sur les pièces de transition (18).

6. Pare-chocs de capot selon la revendication 1, dans lequel la tour (2), la base (3) et la saillie de gestion d'énergie (22) sont formées d'une seule pièce.

7. Pare-chocs de capot selon la revendication 1, dans lequel la saillie de gestion d'énergie (22) a une forme triangulaire.

8. Pare-chocs de capot selon la revendication 1, dans lequel la saillie de gestion d'énergie (22) a un creux intérieur.

9. Pare-chocs de capot selon la revendication 1, comprenant en outre un pare-chocs de tour (34) disposé sur la tour (2), dans lequel le pare-chocs de tour (34) est composé d'un matériau plus mou que le matériau de la tour (2).

10. Pare-chocs de capot selon la revendication 9, dans lequel la tour (2) comprend des saillies pour fixer le pare-chocs de tour (34) à la tour (2).

11. Pare-chocs de capot selon la revendication 1, dans lequel une largeur de la saillie de gestion d'énergie (22) est égale à la première distance à une partie médiane de la saillie de gestion d'énergie (22).

12. Pare-chocs de capot selon la revendication 1, comprenant en outre une extension inférieure (28) sur une surface inférieure du plancher de base (14), dans laquelle l'extension inférieure (28) comprend au moins un bouton-pression élastique (30) configuré pour dévier lorsque le pare-chocs de capot (1) est connecté à un châssis d'un véhicule.

13. Pare-chocs de capot selon la revendication 1, dans lequel chaque pièce de transition (18) comprend un composant horizontal et un composant vertical.

14. Pare-chocs de capot selon la revendication 13, dans lequel les zones frangibles (20) sont situées dans les composants horizontaux.

15. Procédé pour absorber l'énergie d'un impact sur un capot automobile en utilisant un pare-chocs de capot, où le pare-chocs de capot a des pieds de tour (4) espacés les uns des autres; une base (3) avec des parois de base (16), un plancher de base (14) s'étendant entre les parois de base (16) et des pièces de transition (18) s'étendant entre les parois de base (16) et les pieds de tour (4), dans lequel chaque pièce de transition (18) comprend une zone cassante (20) qui est configurée pour se rompre lorsqu'une force prédéterminée est appliquée sur la région cassable (20); une saillie de gestion d'énergie (22) s'étendant à partir du plancher de base (14); le procédé comprenant:
l'application d'une force supérieure à la force prédéterminée aux pièces de transition (18) à travers les pieds de tour (4);
la fracturation des pièces de transition (18) dans les zones frangibles (20);
**caractérisé en**
la descente des pieds de tour (4) sur la saillie de gestion d'énergie (22); l'écartement les pieds de tour (4) les uns des autres avec la saillie de gestion d'énergie (22) pour absorber l'énergie de l'impact.
